# EUROPEAN PATENT APPLICATION

(11) **EP 4 604 019 A1**
(43) Date of publication of application: **20.08.2025**
(21) Application number: 25154219.7
(22) Date of filing: 27.01.2025
(51) Int. Cl.: G06N 3/049, G06N 3/0455, G06N 3/0464, G06N 3/09

(54) **ENERGY EFFICIENT SYSTEMS AND METHODS FOR ANALYZING TIME SERIES DATA USING ATTENTIVE POWER ITERATION**

(30) Priority: 19.02.2024 US 202463555190 P; 12.11.2024 US 202418944878
(71) Applicant: General Electric Technology GmbH, 5400 Baden (CH)
(72) Inventor: HUANG, Hao, Johns Creek, 30022 (US); SHAH, Tapan Ravin, Los Altos, 94024 (US); EVANS, Scott Charles, Niskayuna, 12309 (US); ZIMINSKY, Willy Steve, Greenville, 29615 (US); WILSON, Brock McLaren, Atlanta, 30339 (US); CLAYDON, Ian, Niskayuna, 12309 (US)
(74) Representative: Rüger Abel Patentanwälte PartGmbB

(57) **Abstract**

A computer-implemented method for analyzing time series data is provided. The method includes providing a sequence of time series batches of the time series data to an Attentive Power Iteration (API) model. The method further includes generating, by the API model, a sequence of time series sketches based on the sequence of time series batches of the time series data. The method further includes assigning a weight to new time series batches in the sequence of time series batches based at least partially on a previous time series sketch of the sequence of time series sketches. The method further includes generating an output for each time series sketch in the sequence of time series sketches.

## Description

### CROSS-REFERENCE TO RELATED APPLICATIONS

This application is a non-provisional application claiming the benefit of priority under 35 U.S.C. § 119(e) to U.S. Provisional Application No. 63/555,190, filed February 19, 2024, which is hereby incorporated by reference in its entirety.

### FIELD

The present disclosure relates generally to systems and methods for analyzing time series data. Particularly, the disclosure relates to systems and methods for analyzing time series data by implementing attention weighting.

### BACKGROUND

Resource-constrained devices, characterized by limited computational capacity and memory, are essential components of modern infrastructures. Devices such as edge devices (e.g., routers, smartphones) and distributed energy resources (DERs) like solar PV units, turbines, and gas units, all fall within this category. These devices accumulate vast quantities of high-frequency time series data streams over time, rendering manual real-time analysis impractical. Artificial Intelligence (AI) models, particularly those operating on time series data, have gained traction due to their ability to autonomously discern underlying patterns. However, existing AI models, particularly popular neural networks, often demand substantial memory and computational energy, rendering them unsuitable for direct deployment on resource-constrained devices. A common workaround is to transmit collected data to cloud servers for analysis, but this approach consumes bandwidth, time, and raises concerns about data privacy and security during transmission. Moreover, many AI models rely on batch learning, which processes entire time series simultaneously, instead of incremental learning required for real-time analysis.

To address these challenges, there is a pressing need for streaming and cost-effective models capable of real-time analysis of time series data streams directly on resource-constrained devices.

### BRIEF DESCRIPTION

Aspects and advantages of the computer-implemented methods and computing systems in accordance with the present disclosure will be set forth in part in the following description, or may be obvious from the description, or may be learned through practice of the technology.

In accordance with one embodiment, a computer-implemented method for analyzing time series data is provided. The method includes providing a sequence of time series batches of the time series data to an Attentive Power Iteration (API) model. The method further includes generating, by the API model, a sequence of time series sketches based on the sequence of time series batches of the time series data. The method further includes assigning a weight to new time series batches in the sequence of time series batches based at least partially on a previous time series sketch of the sequence of time series sketches. The method further includes generating an output for each time series sketch in the sequence of time series sketches.

In accordance with another embodiment, a computing system is provided. The computing system includes one or more processors. The computing system further includes one or more non-transitory computer-readable media that collectively store instructions that, when executed by the one or more processors, cause the computing system to perform operations. The operations include providing a sequence of time series batches of the time series data to an Attentive Power Iteration (API) model. The operations further includes generating, by the API model, a sequence of time series sketches based on the sequence of time series batches of the time series data. The operations further includes assigning a weight to new time series batches in the sequence of time series batches based at least partially on a previous time series sketch of the sequence of time series sketches. The operations further includes generating an output for each time series sketch in the sequence of time series sketches.

These and other features, aspects and advantages of the present computer-implemented methods and computing systems will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present computer-implemented methods and computing systems, including the best mode of making and using the present systems and methods, directed to one of ordinary skill in the art, is set forth in the specification, which makes reference to the appended figures, in which:
FIG. 1 illustrates a block diagram of an example computing system that performs real time analytics of time series data according to example embodiments of the present disclosure;
FIG. 2 illustrates a block diagram of an example streaming time series classification model, which may be implemented by the computing system shown in FIG. 1, in accordance with embodiments of the present disclosure;
FIG. 3 illustrates a block diagram of an example streaming time series classification model, which may be implemented by the computing system shown in FIG. 1, in accordance with embodiments of the present disclosure;
FIG. 4 illustrates a flow chart of a computer-implemented method for analyzing time series data in accordance with embodiments of the present disclosure;
FIG. 5 illustrates a process in accordance with embodiments of the present disclosure; and
FIG. 6 illustrates a flow chart of a computer-implemented method for analyzing time series data in accordance with embodiments of the present disclosure.

### DETAILED DESCRIPTION

Reference now will be made in detail to embodiments of the present computer-implemented methods and computing systems, one or more examples of which are illustrated in the drawings. Each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components.

Terms of approximation, such as "about," "approximately," "generally," and "substantially," are not to be limited to the precise value specified. In at least some instances, the approximating language may correspond to the precision of an instrument for measuring the value, or the precision of the methods or machines for constructing or manufacturing the components and/or systems. In at least some instances, the approximating language may correspond to the precision of an instrument for measuring the value, or the precision of the methods or machines for constructing or manufacturing the components and/or systems. For example, the approximating language may refer to being within a 1, 2, 4, 5, 10, 15, or 20 percent margin in either individual values, range(s) of values and/or endpoints defining range(s) of values. When used in the context of an angle or direction, such terms include within ten degrees greater or less than the stated angle or direction. For example, "generally vertical" includes directions within ten degrees of vertical in any direction, e.g., clockwise or counter-clockwise.

As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

This application is directed to systems and methods for addressing the streaming time series classification problem, where categorical class labels are predicted for each time series consisting of ordered sets of real-valued attributes, often multivariate. Streaming time series classification operates on time series streams, generating real-time labels while processing the data only once and utilizing limited storage. This disclosure includes a neural network for streaming time series classification, engineered to operate with restricted computational memory and energy resources, while ensuring high processing speed.

For example, as data from the same time series arrives sequentially, the system may construct a real-time representation using an incremental weighted Principal Component Analysis (PCA) on a supervised neural network learned latent space. This representation is then employed for time series classification. While traditional PCA is an unsupervised method for dimensionality reduction in non-time series data, the system and method of the present disclosure employs a weighted PCA to a temporally and supervised learned latent space to accommodate the nature of time series data. Since time series samples are not equally significant, the system and method of the present disclosure introduces weighted PCA, where each time series sample is assigned weights using a temporal attention model. With such weighted time series streams, the model may incrementally update principal directions, forming distinctive real-time representations for classification. The complete system architecture, encompassing latent space learning and incremental weighted PCA, is trained end-to-end in a supervised learning manner. Specifically, the model may utilize streaming Attentive Power Iteration (strAPI) to incrementally refine principal directions within the supervised latent space. The model may generate real-time representations and labels for each time series without needing to observe the entire sequence. The system and method of the present disclosure have been shown to consistently achieve superior classification accuracy with minimal energy consumption and faster computational speed, on average, when compared against other similar systems.

The systems and methods of the present disclosure provide a number of technical effects and benefits. As one example, the system and methods can be utilized to leverage machine learned models and Attentive Power Iteration models, enabling real-time processing of time series data on resource constrained devices. For example, the models continuously updates a compact representation of the entire time series, enhancing classification (e.g., output) accuracy while conserving energy and processing time. Notably, the models excel in streaming scenarios without requiring complete time series access, enabling swift decisions. The models excel in classification accuracy and energy efficiency, with over 70% less consumption and threefold faster task completion than benchmarks. This work advances real-time responsiveness, energy conservation, and operational effectiveness for constrained devices, contributing to optimizing various applications.

With reference now to the figures, example embodiments of the present disclosure will be discussed in further detail.

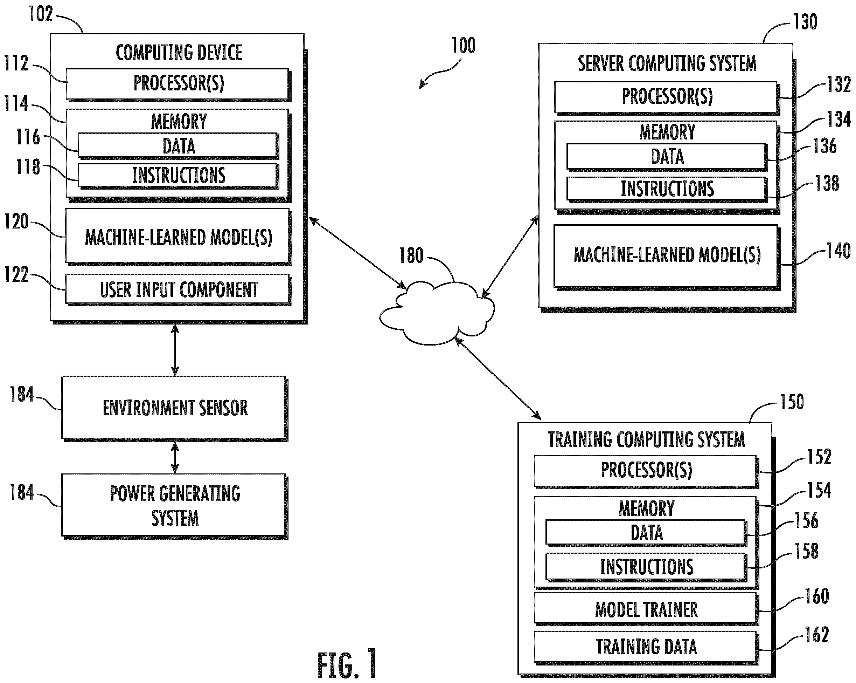

FIG. 1 depicts a block diagram of an example computing system 100 that performs real time analytics of time series data according to example embodiments of the present disclosure. The system 100 includes a user computing device 102, a server computing system 130, and a training computing system 150 that are communicatively coupled over a network 180.

The user computing device 102 can be any type of computing device, such as, for example, a control computing device for a machine (e.g., a control computing device for a wind turbine, water turbine, crane, etc.), a personal computing device (e.g., laptop or desktop), a mobile computing device (e.g., smartphone or tablet), a diagnostic computing device for diagnosing machine anomalies, a wearable computing device, an embedded computing device, an edge computing device, or any other type of computing device.

The user computing device 102 includes one or more processors 112 and a memory 114. The one or more processors 112 can be any suitable processing device (e.g., a processor core, a microprocessor, an ASIC, an FPGA, a controller, a microcontroller, etc.) and can be one processor or a plurality of processors that are operatively connected. The memory 114 can include one or more non-transitory computer-readable storage media, such as RAM, ROM, EEPROM, EPROM, flash memory devices, magnetic disks, etc., and combinations thereof. The memory 114 can store data 116 and instructions 118 which are executed by the processor 112 to cause the user computing device 102 to perform operations.

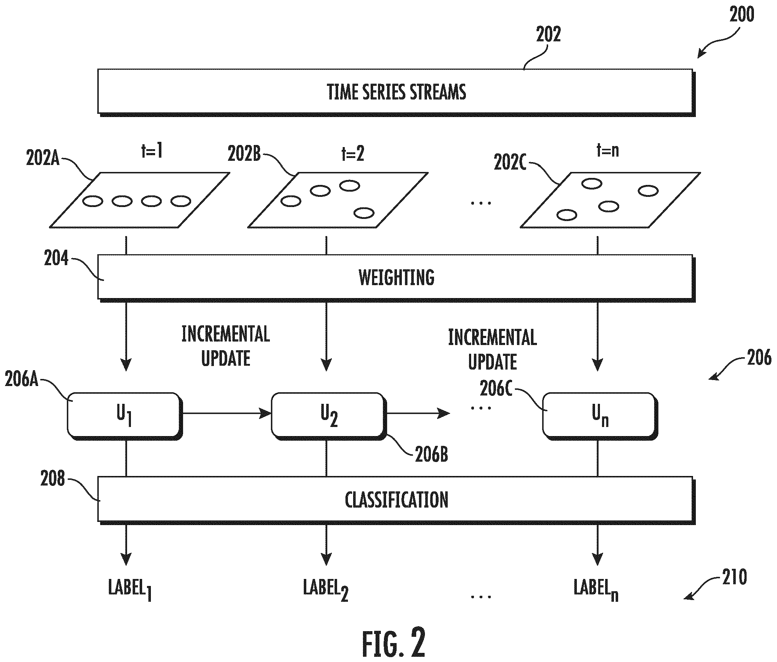

In some implementations, the user computing device 102 can store or include one or more machine-learned models 120. For example, the machine-learned models 120 can be or can otherwise include various machine-learned models such as neural networks (e.g., deep neural networks) or other types of machine-learned models, including non-linear models and/or linear models. Neural networks can include feed-forward neural networks, recurrent neural networks (e.g., long short-term memory recurrent neural networks), convolutional neural networks, temporal convolutional networks (TCNs) or other forms of neural networks. Some example machine-learned models can leverage an attention mechanism such as self-attention. For example, some example machine-learned models can include multi-headed self-attention models (e.g., transformer models). Example machine-learned models 120 are discussed with reference to Figures 2-3.

In some implementations, the one or more machine-learned models 120 can be received from the server computing system 130 over network 180, stored in the user computing device memory 114, and then used or otherwise implemented by the one or more processors 112. In some implementations, the user computing device 102 can implement multiple parallel instances of a single machine-learned model 120.

Additionally or alternatively, one or more machine-learned models 140 can be included in or otherwise stored and implemented by the server computing system 130 that communicates with the user computing device 102 according to a client-server relationship. For example, the machine-learned models 140 can be implemented by the server computing system 130 as a portion of a web service. Thus, one or more models 120 can be stored and implemented at the user computing device 102 and/or one or more models 140 can be stored and implemented at the server computing system 130.

The user computing device 102 can also include one or more user input components 122 that receives user input. For example, the user input component 122 can be a touch-sensitive component (e.g., a touch-sensitive display screen or a touch pad), a microphone, a traditional keyboard, or other means by which a user can provide user input.

The user computing device 102 may include and/or may be communicatively connected with one or more sensors. The one or more sensors may be utilized to generate time series data. The time series data may be descriptive of the performance of a machine and/or environment signals within a span of time.

The server computing system 130 includes one or more processors 132 and a memory 134. The one or more processors 132 can be any suitable processing device (e.g., a processor core, a microprocessor, an ASIC, an FPGA, a controller, a microcontroller, etc.) and can be one processor or a plurality of processors that are operatively connected. The memory 134 can include one or more non-transitory computer-readable storage media, such as RAM, ROM, EEPROM, EPROM, flash memory devices, magnetic disks, etc., and combinations thereof. The memory 134 can store data 136 and instructions 138 which are executed by the processor 132 to cause the server computing system 130 to perform operations.

In some implementations, the server computing system 130 includes or is otherwise implemented by one or more server computing devices. In instances in which the server computing system 130 includes plural server computing devices, such server computing devices can operate according to sequential computing architectures, parallel computing architectures, or some combination thereof.

As described above, the server computing system 130 can store or otherwise include one or more machine-learned models 140. For example, the models 140 can be or can otherwise include various machine-learned models. Example machine-learned models include neural networks or other multi-layer non-linear models. Example neural networks include feed forward neural networks, deep neural networks, recurrent neural networks, and convolutional neural networks. Some example machine-learned models can leverage an attention mechanism such as self-attention. For example, some example machine-learned models can include multi-headed self-attention models (e.g., transformer models). Example models 140 are discussed with reference to Figures 2-3.

The user computing device 102 and/or the server computing system 130 can train the models 120 and/or 140 via interaction with the training computing system 150 that is communicatively coupled over the network 180. The training computing system 150 can be separate from the server computing system 130, can be a portion of the server computing system 130, or can be a portion of the user computing system 102.

The training computing system 150 includes one or more processors 152 and a memory 154. The one or more processors 152 can be any suitable processing device (e.g., a processor core, a microprocessor, an ASIC, an FPGA, a controller, a microcontroller, etc.) and can be one processor or a plurality of processors that are operatively connected. The memory 154 can include one or more non-transitory computer-readable storage media, such as RAM, ROM, EEPROM, EPROM, flash memory devices, magnetic disks, etc., and combinations thereof. The memory 154 can store data 156 and instructions 158 which are executed by the processor 152 to cause the training computing system 150 to perform operations. In some implementations, the training computing system 150 includes or is otherwise implemented by one or more server computing devices.

The training computing system 150 can include a model trainer 160 that trains the machine-learned models 120 and/or 140 stored at the user computing device 102 and/or the server computing system 130 using various training or learning techniques, such as, for example, backwards propagation of errors. For example, a loss function can be backpropagated through the model(s) to update one or more parameters of the model(s) (e.g., based on a gradient of the loss function). Various loss functions can be used such as mean squared error, likelihood loss, cross entropy loss, hinge loss, and/or various other loss functions. Gradient descent techniques can be used to iteratively update the parameters over a number of training iterations.

In some implementations, performing backwards propagation of errors can include performing truncated backpropagation through time. The model trainer 160 can perform a number of generalization techniques (e.g., weight decays, dropouts, etc.) to improve the generalization capability of the models being trained. The model trainer 160 may include one or more teacher models for performing distillation training to generate compressed models that may be implemented via the computing device 102.

The model trainer 160 includes computer logic utilized to provide desired functionality. The model trainer 160 can be implemented in hardware, firmware, and/or software controlling a general purpose processor. For example, in some implementations, the model trainer 160 includes program files stored on a storage device, loaded into a memory and executed by one or more processors. In other implementations, the model trainer 160 includes one or more sets of computer-executable instructions that are stored in a tangible computer-readable storage medium such as RAM, hard disk, or optical or magnetic media.

The network 180 can be any type of communications network, such as a local area network (e.g., intranet), wide area network (e.g., Internet), or some combination thereof and can include any number of wired or wireless links. In general, communication over the network 180 can be carried via any type of wired and/or wireless connection, using a wide variety of communication protocols (e.g., TCP/IP, HTTP, SMTP, FTP), encodings or formats (e.g., HTML, XML), and/or protection schemes (e.g., VPN, secure HTTP, SSL).

The machine-learned models described in this specification may be used in a variety of tasks, applications, and/or use cases.

In some implementations, the input to the machine-learned model(s) of the present disclosure can be sensor data, e.g., from an environmental sensor 182. The environmental may be operably connected to (or coupled to) a power generating system 184, such as a gas turbine engine, hydro-turbine, wind turbine, or other power generating system.

The machine-learned model(s) can process the sensor data to generate an output. As an example, the machine-learned model(s) can process the sensor data to generate a recognition output. As another example, the machine-learned model(s) can process the sensor data to generate a prediction output. As another example, the machine-learned model(s) can process the sensor data to generate a classification output. As another example, the machine-learned model(s) can process the sensor data to generate a segmentation output. As another example, the machine-learned model(s) can process the sensor data to generate a visualization output. As another example, the machine-learned model(s) can process the sensor data to generate a diagnostic output. As another example, the machine-learned model(s) can process the sensor data to generate a detection output.

FIG. 1 illustrates one example computing system that can be used to implement the present disclosure. Other computing systems can be used as well. For example, in some implementations, the user computing device 102 can include the model trainer 160 and the training dataset 162. In such implementations, the models 120 can be both trained and used locally at the user computing device 102. In some of such implementations, the user computing device 102 can implement the model trainer 160 to personalize the models 120 based on user-specific data.

In many embodiments, the computing system 100 may be a resource constrained device (e.g., having limited memory and/or processing capability). other embodiments, the computing system 100 may be an edge computing device.

FIG. 2 depicts a block diagram of an example streaming time series classification model 200, which may be implemented by the computing system 100 described above with reference to FIG. 1, according to example embodiments of the present disclosure. In some implementations, the model 200 is trained to receive a sequence of time series streams or batches 202. The model 200 may be further configured to implement weighted Principal Component analysis (e.g., weighted PCA or WPCA) to the time series batches 202 via an Attentive Power Iteration (API) model (or weighting block) 204 to generate a sequence of time series sketches 206.

The API model 204 may incrementally refine principal directions within the supervised latent space. The API model 204 may find dominant eigenvalues and eigenvectors of the large time series batches 202 and may incorporate an attention mechanism. The attention mechanism enables the API model 204 to weigh certain features or dimensions more heavily, thereby improving performance. The API model 204 may advantageously cause temporal patterns of the time series batches 202 to be effectively captured by iteratively updating a reduced representation of the time series batches 202 (i.e., by iteratively updating the sequence of time series sketches 206). The API model 204 can ensure that significant temporal patterns are highlighted by assigning a corresponding weight to the significant temporal patterns, enabling accurate classification. For example, significant temporal patterns may include (but are not limited to) trends (e.g., long term directional movements or tendencies), seasonality (e.g., periodic fluctuations or cycles), cyclic patterns (e.g., non-seasonal fluctuations), or other patterns.

The model 200 may be further configured to provide real-time analytics on the sequence of time series sketches via a classification model 208 (such as predictions, classifications, or other outputs). In some embodiments, as shown, the classification model 208 may generate a classification label 210 for each time series sketch 206A, 206B, 206C in the sequence of time series sketches 206.

As shown, the model 200 may be provided with a sequence of time series batches 202, such as a first time series batch 202A, a second time series batch 202B, up to an Nth time series batch 202C. The sequence of time series batches 202 may each be a portion of a time series (or time series data), which may be reduced by the model 200 prior to being assigned a weight in the API model 204. As one non-limiting example, given a time series of data collected over 10 minutes, the first time series batch 102A may be the first minute of data (e.g., data from the time series collected from minute 0 to minute 1), the second time series batch 102B may be the second minute of data (e.g., data from the time series collected from minute 1 to minute 2), and so on and so forth. The time series from which the time series batches 202 are formed may include any suitable time series of data. For example, the time series may be sensor data, weather data, supply chain data, energy consumption data, stock price data, or other data collected (e.g. regularly collected) over a time period.

The API model 204 may advantageously cause temporal patterns of the time series batches 202 to be effectively captured by iteratively updating a reduced representation of the time series batches 202 (i.e., by iteratively updating the sequence of time series sketches 206). The API model 204 can ensure that significant temporal patterns are highlighted by assigning a corresponding weight to the significant temporal patterns, enabling accurate classification. For example, significant temporal patterns may include (but are not limited to) trends (e.g., long term directional movements or tendencies), seasonality (e.g., periodic fluctuations or cycles), cyclic patterns (e.g., non-seasonal fluctuations), or other patterns.

In the API model 204, weighted PCA may be employed on each of the time series batches 202. The weighed PCA may be an extension of a traditional PCA method, in which the importance or significance of each time series batch 202A, 202B, 202C in the sequence of time series batches 202 is given a weight. For example, in a traditional PCA, all data points are treated equally (e.g., given equal weight). By contrast, in a weighted PCA (or WPCA), each time series batch 202A, 202B, 202C is assigned (or adjusted by) a weight that reflects the relative importance or contribution to the analysis. The weighted PCA may include multiple steps, such as (but not limited to) a data processing step, a weighting step, a covariance matrix calculation, an eigen-decomposition step, a principal component selection step, and a dimensionality reduction step.

How heavily a time series batch is weighted by the API model 204 may be based on the significance of the temporal pattern. For example, the model 200 may be configured to weigh certain trends recognized in the time series batches 202 more heavily than others.

The model 200 integrates matrix sketching techniques within a neural network framework, specifically tailored for real-time time series classification. Illustrated in FIG. 2, the approach involves incorporating unsupervised matrix sketching within a supervised context. That is, the matrix sketching may involve creating a smaller approximate representation (e.g., a sketch or matrix sketch). The matrix sketching may be used to reduce the dimensionality of the data while preserving important structural information. This integration of matrix sketching within the supervised context can enable the continuous updating of the sketch linked to a sequence of weighted time series streams. The dynamically updated sketch can serve as a compact representation of the input time series, facilitating real-time classification into known time series classes at any given timestamp. This innovative amalgamation of unsupervised matrix sketching with supervised neural networks addresses the demands of real-time processing while maintaining the accuracy and efficiency of classification tasks.

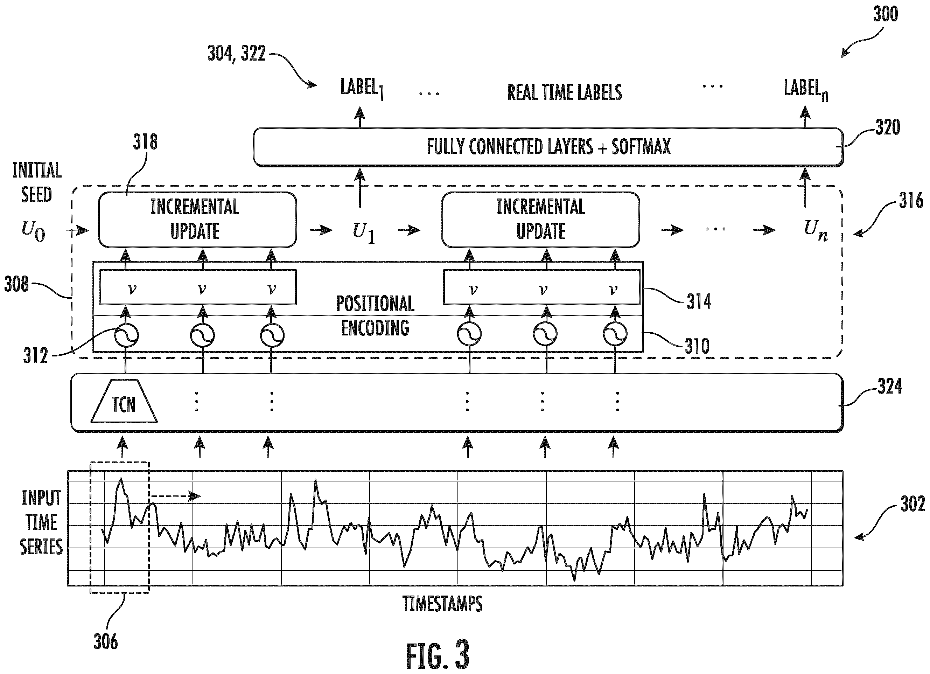

FIG. 3 illustrates a block diagram of a streaming time series classification model 300, which may be implemented by the computing system 100 described above with reference to FIG. 1, according to example embodiments of the present disclosure. As shown, the model 300 may be provided with time series data 302 as an input, and the model 300 may generate an output 304 (such as a classification label, prediction, or other output). The time series data 302 may be raw time series data, e.g., captured from a sensor. In exemplary implementations, the time series data 302 may be provided from an environmental sensor connected to a turbine system (such as a gas turbine system or a wind turbine system). The time series data may be a series of data indexed in time order, such as temperature data, pressure data, speed data (e.g., rotational speed data, translational speed data, and/or flow speed data), or other data.

The time series data 302 may be provided to the model 300 in a sequence of time series batches 306 (as indicated by the dashed box in FIG. 3). Each of the time series batches 306 may be a portion of the total time series data 302. In some implementations, the time series batches 306 may each be an aggregate or compiling of a portion of raw time series data 302. The sequence of time series batches 306 may be provided to the model 300 in order, with each new time series batch following from where the last time series batch left off. For example, a first time series batch may be provided to the model 300, followed by a second time series batch, followed by a third time series batch, and so on and so forth. As an example, for a time series of data over ten minutes, the first time series batch may include the time series data from the first minute, the second time series batch may include the data from the second minute, and the third time series batch may include the time series data from the third minute.

In some implementations, the sequence of time series batches 306 may be provided to an API model 308. The API model 308 may generate a sequence of time series sketches 316 (e.g., U₁, U₂, ...U_{N}) based on the sequence of time series batches 306 of the time series data 302. The sequence of time series batches 306 may be positionally encoded, reduced, and weighted by the API model 308 to generate the sequence of time series sketches 316. Each time series sketch 316 (e.g., U₁, U₂, ...U_{N}) may be a compact summary of a respective time series batch 306 (e.g., a compact summary of a data aggregation, such as a compact summary of a time series batch 306, which may be an aggregate of a portion of the raw time series data 302). In such implementations, necessary information from each time series batch 306 may be captured while other information may be extracted. In this way, computing a metric using the series of time series sketches 316 (e.g., U₁, U₂, ...U_{N}) may advantageously be less expensive than computing an exact value. In exemplary embodiments, each time series sketch may be a sketch of a matrix. However, in other embodiments, each time series sketch may be a set of vectors or a graphical representation of the time series data. For example, in embodiments in which the time series data is descriptive of temperature inside a gas turbine engine (e.g., temperature in one of the compressor section, combustion section, or turbine section), the time series sketch may be a compact representation of the temperature data (e.g., a compact matrix or compact graphical representation).

For example, various implementations, the API model 308 may include a positional encoding model 310 of the API model 308. The positional encoding model 310 may be provided with the sequence of time series batches 306, and the positional encoding model 310 may generate a sequence of encoded time batches 312 as an output. Subsequently, the sequence of encoded time batches 312 may be provided to a projection model 314, which may project the sequence of encoded time batches 312 to sketch space. Particularly, the projection model 314 may implement matrix sketching to project the sequence of encoded time batches 312 to sketch space. The projection model 314 may generate the sequence of time series sketches from the sequence of encoded time batches 312.

In many embodiments, the API model 312 may include an incremental update model 318. New time series batches 306 may be assigned a weight (i.e., the new time series batches 306 may be modified or adjusted by the weight). The weight assigned to the new time series batches 306 may be based at least partially on previous time series sketches of the sequence of time series sketches 316. The weight assigned to the new time series batches 306 may be the weighted summation of two elements: the first element approximates the observed data covariance, and the second element represents the new batch's covariance.

In many embodiments, the model 300 may generate an output 304 (such as a classification label, prediction, or other output) for each time series sketch 316 in the sequence of time series sketches 316. For example, the API model may provide the sequence of time series sketches 316 to a classification block 320 to predict a class probability distribution. As shown, the classification block 320 may include a fully connected layer and a softmax function. In various implementations, the model 300 may generate (in real time) a label 322 for each time series sketch 316 as the output 304. In other implementations, the model 300 may generate (in real time) a prediction for each time series sketch 316 as the output 304.

As one non-limiting example, the model 300 may be provided with sensor data indicative of one or more parameters associated with a power generating system (such as a wind turbine or a gas turbine engine) indexed in time order (e.g., time series data). The sensor data may be pressure data (e.g., from a pressure sensor), temperature data (e.g., from a temperature sensor), vibration data (e.g., from a vibration sensor or accelerometer), and/or speed data. The output 304 of the model 300 may be a classification label indicating a type of failure mode of the power generating system. For example, in embodiments where the power generating system is a gas turbine engine, the failure modes classification labels that may be output from the model 300 may include: a bearing vibration failure event (e.g., a bearing vibration exceeds a threshold for a predetermined period of time); temperature failure event (e.g., a temperature spread in an exhaust section of the gas turbine engine exceeds a threshold for a predetermined period of time, thereby indicating a leak in the combustion section); an overspeed failure event (e.g., the rotor of the gas turbine engine is rotating at a speed that exceeds a failure threshold for a predetermined period of time). In embodiments where the power generating system is a wind turbine system, the failure modes classification labels that may be output from the model 300 may include a blade crack event or other failure event.

The time series data may be analyzed by the model 300 in real time. For example, the sensor data may be provided to the model 300 in real time, such that the model 300 may generate the output 304 a classification label in real time. This allows the model 300 to determine a failure event as it occurs (or shortly after it occurs). Determining the failure event quickly may advantageously allow for the failure event to be addressed quickly, thereby minimizing downtime of the power generating system.

In some embodiments, the model 300 may include a Temporal Convolutional Network or model (TCN) 324. The sequence of time series batches 306 may be provided to the TCN 324 to generate a sequence of TCN-generated embeddings (e.g., as an output of the TCN 324). In various implementations, the TCN 324 may employ a sliding window to extract nonlinear features from the sequence of time series batches 306 before being provided to the API model 308. For example, the model 300 may provide the sequence of TCN-generated embeddings to the API model 308 as an input. The TCN-generated embedding may be a learned representation of the input data (e.g., the time series data 302), in which certain nonlinear features have been extracted from the time series data by the TCN 324.

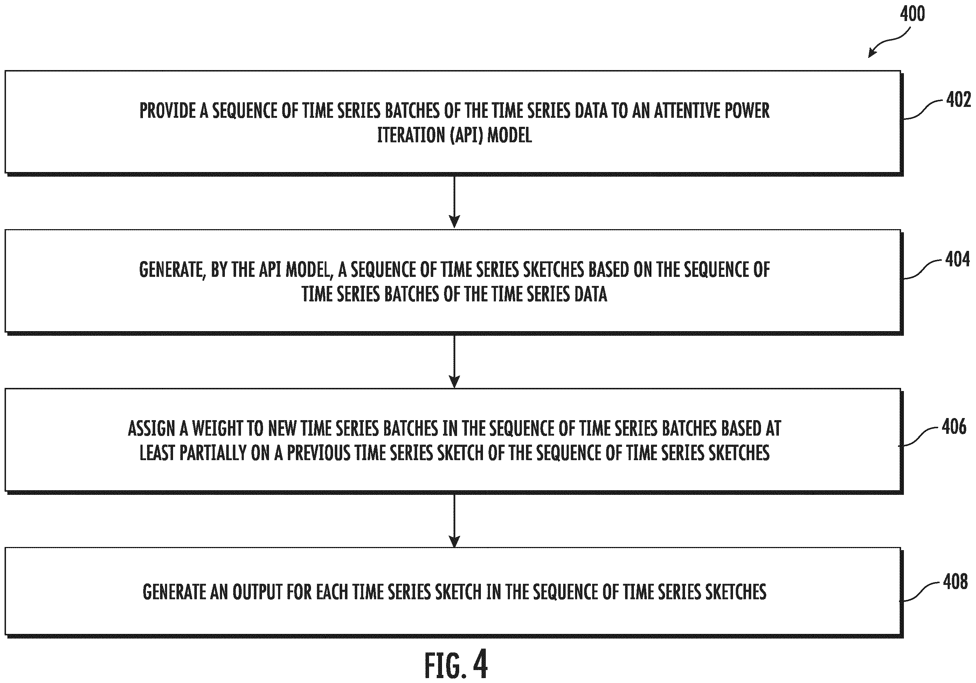

FIG. 4 illustrates a flow chart of a computer-implemented method 400 for analyzing time series data. The method 400 may be executed by, e.g., the computing system 100 shown and described above with reference to FIG. 1. At (402), the method 400 may include providing a sequence of time series batches of the time series data to an Attentive Power Iteration (API) model. At (404), the method 400 may include generating, by the API model, a sequence of time series sketches based on the sequence of time series batches of the time series data. The method 400 may further include, at (406), assigning a weight to new time series batches in the sequence of time series batches based at least partially on a previous time series sketch of the sequence of time series sketches. At (408), the method 400 may further include generating an output for each time series sketch in the sequence of time series sketches.

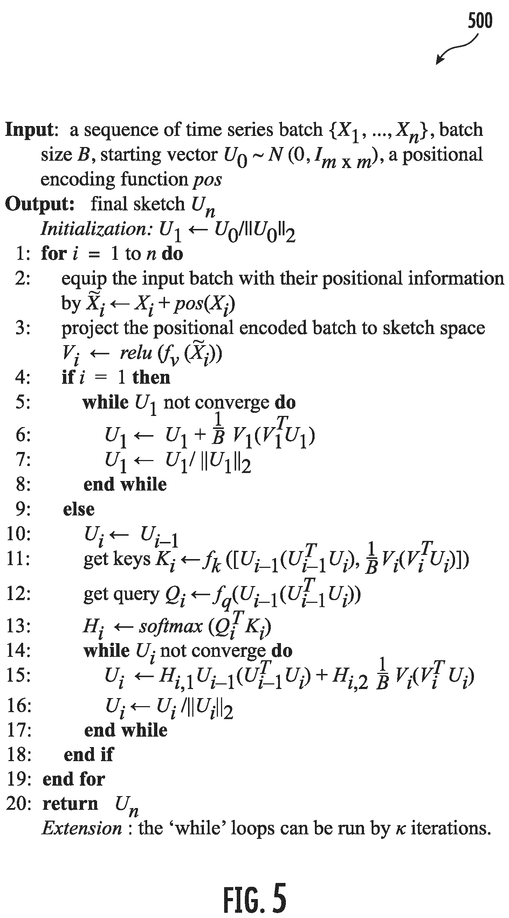

FIG. 5 illustrates a process 500, which may be representative of the API model 308 (FIG. 3), in accordance with embodiments of the present disclosure. Particularly, the API model 308 may follow the process shown in FIG. 5 to generate the sequence of time series sketches.

In line 1, a for loop is initiated for handling each batch (e.g., X₁, ... X_{N}) in order.

In line 2, positional encoding follows time series order, distinct from permutation-invariant samples in regular data streams. Positional information within time series is pivotal. The process 500 implements this by using Continuous Augmented Positional Embeddings (CAPE), which is advantageous due to CAPE having computational efficiency and robustness in handling input length.

In line 3, the encoded batch undergoes transformation via fully-connected layers fᵥ, followed by relu-activation. This introduces non-linearity, boosting the expressiveness of the learned sketch.

In lines 4 to 8, for the first batch (e.g., X₁), the initial sketch vector U₁ is updated until the initial sketch vector converges. In lines 9 to 18, for any subsequent batch (i.e., not the first batch), the sketch vector Uᵢ is updated until convergence. In line 10, the sketch Uᵢ is initialized with the previous sketch U.

Lines 11 to 15 incorporate an attention model that assigns weights to new batches relative to the latest sketch. Line 15's update is a weighted summation of two elements: the first approximates the observed data covariance, while the second represents the new batch's covariance. These weights stem from the attention model in lines 11 to 13.

Notably, the normalization steps in lines 7 and 16 of Algorithm 2 offer two benefits: 1) preventing sketch magnitude from becoming excessively large and enhancing convergence stability; 2) ensuring classification robustness to time series length. Without normalization, sketch magnitude would correlate with time series length, undermining similarity between shorter and longer time series of the same class.

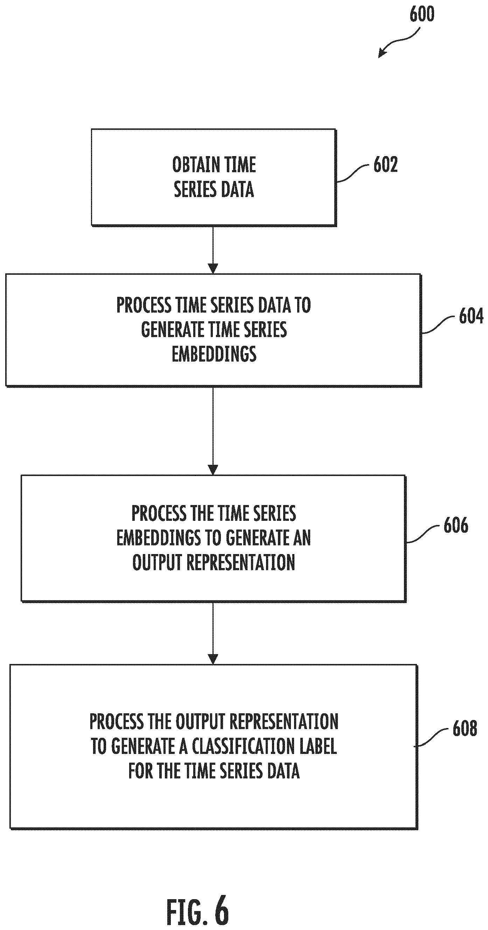

Referring now to FIG. 6, a flow chart of a computer-implemented method 600 for analyzing time series data is provided. The method 600 may be executed by, e.g., the computing system 100 shown and described above with reference to FIG. 1. The method 600 may include at (602) obtaining or receiving time series data as an input. The time series data may be descriptive of a series of time-based data points. The method 600 may further include at (604) processing the time series data with a temporal convolutional model to generate one or more time series embeddings. The temporal convolutional model may be the TCN 324 described above with reference to FIG. 3. The method 600 may further include processing the one or more time series embeddings with a representation generation model to generate an output representation, the output representation may be descriptive of a graphical representation of the series of time-based data points. The representation generation model may transform the time series embeddings into a compact, informative, representation of the embeddings (e.g., via dimensional reduction). The output representation may be a matrix sketch in many implementations. The matrix sketch may reduce the size of the time series embeddings while maintaining the key characteristics. The method 600 may further include at (608) processing the output representation with a classification model to generate a classification label for the time series data. In many embodiments, the time series data was generated with one or more sensors associated with a power generation system, such as a gas turbine engine. Additionally, in various implementations, the classification label comprises an anomaly detection classification. The anomaly detection classification may identify trends or data points that deviate significantly from the norm for the time series data. For example, with time series data associated with one or more parameters of a gas turbine engine, the anomaly detection classification may identify various trips (or failure events) of the gas turbine engine, such as overspeed, high temperature in the exhaust section, etc.

The computing system 100, the models 200, 300, the method 400, the process 500, and the method 600 described above with reference to FIGS. 1-6 provide many advantages over known models. For example, known Artificial Intelligence (AI) models, particularly popular neural networks, often demand substantial memory and computational energy rendering them unsuitable for deployment on resource constrained devices. The models 200, 300 described above are engineered to operate with restricted computational memory and energy resources, while ensuring high processing speed. The configurations including the models described herein can perform complex data processing tasks on devices with limited computational resources and can perform the tasks with reduced latency when compared to traditional techniques. Experimental results underscore the models 200, 300 exceptional performance, showcasing not only superior accuracy but also significantly reduced energy consumption, enhanced running speed, and diminished computational complexity.

The above-disclosed models 200, 300 advantageously utilizes the API model 204, 308, enabling real-time processing on resource constrained devices. The models 200, 300 continuously updates a compact representation of the entire time series, enhancing classification (e.g., output) accuracy while conserving energy and processing time. Notably, the models 200, 300 excel in streaming scenarios without requiring complete time series access, enabling swift decisions. The models 200, 300 excels in classification accuracy and energy efficiency, with over 70% less consumption and threefold faster task completion than benchmarks. This work advances real-time responsiveness, energy conservation, and operational effectiveness for constrained devices, contributing to optimizing various applications.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

Further aspects of the invention are provided by the subject matter of the following clauses:
A computer-implemented method for analyzing time series data, the method comprising: obtaining, by a computing system comprising one or more processors a sequence of time series batches of the time series data; generating, by the computing system and with an Attentive Power Iteration (API) model, a sequence of time series sketches based on the sequence of time series batches of the time series data; assigning, by the computing system, a weight to new time series batches in the sequence of time series batches based at least partially on a previous time series sketch of the sequence of time series sketches; and generating, by the computing system, an output for each time series sketch in the sequence of time series sketches.

The computer-implemented method as in any preceding clause, further comprising providing the sequence of time series batches to a Temporal Convolutional Network (TCN) to generate a sequence of TCN-generated embeddings, wherein the TCN extracts nonlinear features from the sequence of time series batches by performing sliding window processing on the time series data.

The computer-implemented method as in any preceding clause, further comprising providing the sequence of TCN-generated embeddings to the API model as an input.

The computer-implemented method as in any preceding clause, further comprising providing the sequence of time series batches to a positional encoding model of the API model, the positional encoding model generating a sequence of encoded time batches from the sequence of time series batches.

The computer-implemented method as in any preceding clause, further comprising providing the sequence of encoded time series batches to a projection model, the projection model generating the sequence of time series sketches from the sequence of encoded time series batches.

The computer-implemented method as in any preceding clause, further comprising providing the sequence of time series sketches to a classification block to predict a class probability distribution.

The computer-implemented method as in any preceding clause, wherein generating an output further comprises: generating a classification label for each time series sketch in the sequence of time series sketches.

The computer-implemented method as in any preceding clause, wherein generating an output further comprises: generating a prediction for each time series sketch in the sequence of time series sketches.

The computer-implemented method as in any preceding clause, wherein the API model follows a process shown in FIG. 5 to generate the sequence of time series sketches.

A computing system for analyzing time series data, the system comprising: one or more processors; and one or more non-transitory computer-readable media that collectively store instructions that, when executed by the one or more processors, cause the computing system to perform operations, the operations comprising: obtaining a sequence of time series batches of the time series data; generating, by an Attentive Power Iteration (API) model, a sequence of time series sketches based on the sequence of time series batches of the time series data; assigning a weight to new time series batches in the sequence of time series batches based at least partially on a previous time series sketch of the sequence of time series sketches; and generating an output for each time series sketch in the sequence of time series sketches.

The computing system as in any preceding clause, further comprising providing the sequence of time series batches to a Temporal Convolutional Network (TCN) to generate a sequence of TCN-generated embeddings, wherein the TCN employs a sliding window to extract nonlinear features from the sequence of time series batches.

The computing system as in any preceding clause, further comprising providing the sequence of TCN-generated embeddings to the API model as an input.

The computing system as in any preceding clause, further comprising providing the sequence of time series batches to a positional encoding model of the API, the positional encoding model generating a sequence of encoded time batches from the sequence of time series batches.

The computing system as in any preceding clause, further comprising providing the sequence of encoded time series batches to a projection model, the projection model generating the sequence of time series sketches from the sequence of encoded time series batches.

The computing system as in any preceding clause, further comprising providing the sequence of time series sketches to a classification block to predict a class probability distribution, the classification block comprising a fully connected layer and a softmax function.

The computing system as in any preceding clause, wherein generating an output further comprises: generating a classification label for each time series sketch in the sequence of time series sketches.

The computing system as in any preceding clause, wherein generating an output further comprises: generating a prediction for each time series sketch in the sequence of time series sketches.

The computing system as in any preceding clause, wherein the API model follows the process shown in FIG. 5 to generate the sequence of time series sketches.

A method in accordance with embodiments as shown and described herein.

A computing system in accordance with embodiments as shown and described herein.

A computing system for time-based data classification, the system comprising: one or more processors; and one or more non-transitory computer-readable media that collectively store instructions that, when executed by the one or more processors, cause the computing system to perform operations, the operations comprising: obtaining time series data, wherein the time series data is descriptive of a series of time-based data points; processing the time series data with a temporal convolutional model to generate one or more time series embeddings; processing the one or more time series embeddings with a representation generation model to generate an output representation, wherein the output representation is descriptive of a graphical representation of the series of time-based data points; and processing the output representation with a classification model to generate a classification label for the time series data.

The system of any preceding clause, wherein the output representation comprises a matrix sketch.

The system of any preceding clause, wherein the representation generation model comprises one or more multi-head self-attention models and one or more power iteration models, wherein the one or more power iteration models are configured to process input data and generate one or more eigenvectors.

The system of any preceding clause, wherein the time series data was generated with one or more sensors associated with a turbine, and wherein the classification label comprises an anomaly detection classification.

## Claims

1. A computer-implemented method for analyzing time series data, the method comprising:
obtaining, by a computing system comprising one or more processors a sequence of time series batches of the time series data;
generating, by the computing system and with an Attentive Power Iteration (API) model, a sequence of time series sketches based on the sequence of time series batches of the time series data;
assigning, by the computing system, a weight to new time series batches in the sequence of time series batches based at least partially on a previous time series sketch of the sequence of time series sketches; and
generating, by the computing system, an output for each time series sketch in the sequence of time series sketches.

2. The computer-implemented method as in claim 1, further comprising providing the sequence of time series batches to a Temporal Convolutional Network (TCN) to generate a sequence of TCN-generated embeddings, wherein the TCN extracts nonlinear features from the sequence of time series batches by performing sliding window processing on the time series data.

3. The computer-implemented method as in claim 2, further comprising providing the sequence of TCN-generated embeddings to the API model as an input.

4. The computer-implemented method as in claim 1, further comprising providing the sequence of time series batches to a positional encoding model of the API model, the positional encoding model generating a sequence of encoded time batches from the sequence of time series batches.

5. The computer-implemented method as in claim 4, further comprising providing the sequence of encoded time series batches to a projection model, the projection model generating the sequence of time series sketches from the sequence of encoded time series batches.

6. The computer-implemented method as in claim 1, further comprising providing the sequence of time series sketches to a classification block to predict a class probability distribution.

7. The computer-implemented method as in claim 1, wherein generating an output further comprises:
generating a classification label for each time series sketch in the sequence of time series sketches.

8. The computer-implemented method as in claim 1, wherein generating an output further comprises:
generating a prediction for each time series sketch in the sequence of time series sketches.

9. A computing system for analyzing time series data, the system comprising:
one or more processors; and
one or more non-transitory computer-readable media that collectively store instructions that, when executed by the one or more processors, cause the computing system to perform operations, the operations comprising:
obtaining a sequence of time series batches of the time series data;
generating, by an Attentive Power Iteration (API) model, a sequence of time series sketches based on the sequence of time series batches of the time series data;
assigning a weight to new time series batches in the sequence of time series batches based at least partially on a previous time series sketch of the sequence of time series sketches; and
generating an output for each time series sketch in the sequence of time series sketches.

10. The computing system as in claim 9, further comprising providing the sequence of time series batches to a Temporal Convolutional Network (TCN) to generate a sequence of TCN-generated embeddings, wherein the TCN employs a sliding window to extract nonlinear features from the sequence of time series batches.

11. The computing system as in claim 9, further comprising providing the sequence of TCN-generated embeddings to the API model as an input.

12. The computing system as in claim 9, further comprising providing the sequence of time series batches to a positional encoding model of the API, the positional encoding model generating a sequence of encoded time batches from the sequence of time series batches.

13. The computing system as in claim 12, further comprising providing the sequence of encoded time series batches to a projection model, the projection model generating the sequence of time series sketches from the sequence of encoded time series batches.

14. The computing system as in claim 9, further comprising providing the sequence of time series sketches to a classification block to predict a class probability distribution, the classification block comprising a fully connected layer and a softmax function.

15. The computing system as in claim 9, wherein generating an output further comprises:
generating a classification label for each time series sketch in the sequence of time series sketches.
